# EUROPÄISCHE PATENTSCHRIFT

(11) **EP 2 807 710 B1**
(45) Veröffentlichungstag und Bekanntmachung des Hinweises auf die Patenterteilung: **23.05.2018**
(21) Anmeldenummer: 13712150.5
(22) Anmeldetag: 28.01.2013
(51) Int. Cl.: H01S 3/094, H01S 3/11, H01S 3/16, H01S 3/067, H01S 3/00

(54) **VORRICHTUNG ZUR ERZEUGUNG VON LICHTPULSEN**
DEVICE FOR GENERATING LIGHT PULSES
DISPOSITIF DE PRODUCTION D'IMPULSIONS DE LUMIERE

(30) Priorität: 27.01.2012 DE 102012001511; 16.02.2012 DE 102012002958
(43) Veröffentlichungstag der Anmeldung: 03.12.2014
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: EIDAM, Tino, 07751 Jena (DE); LIMPERT, Jens, 07751 Jena (DE); KLENKE, Arno, 07747 Jena (DE); TÜNNERMANN, Andreas, 99425 Weimar (DE); ROTHHARDT, Jan, 07743 Jena (DE); HÄDRICH, Steffen, 07743 Jena (DE); SEISE, Enrico, 07639 Tautenhain (DE)
(74) Vertreter: Behrendt, Arne
(86) Internationale Anmeldenummer: PCT/EP2013/051585
(87) Internationale Veröffentlichungsnummer: WO 2013/110811

(56) Entgegenhaltungen:
- WO-A1-2007/085859
- WO-A1-2009/103313
- WO-A2-2006/110897
- DE-C1- 19 750 320
- DE-T2- 69 006 958
- ROTMAN S R ET AL: "PULSE-WIDTH STABILIZATION OF A SYNCHRONOUSLY PUMPED MODE-LOCKED DYE LASER", APPLIED PHYSICS LETTERS, AIP, AMERICAN INSTITUTE OF PHYSICS, MELVILLE, NY, US, Bd. 36, Nr. 11, 1. Juni 1980 (1980-06-01), Seiten 886-888, XP000705998, ISSN: 0003-6951, DOI: 10.1063/1.91371

## Beschreibung

Die Erfindung betrifft eine Vorrichtung zur Erzeugung von Lichtpulsen, mit einer Pulslichtquelle, die eine Abfolge von Lichtpulsen emittiert, einem Überhöhungsresonator, in den die von der Pulslichtquelle emittierten Lichtpulse eingekoppelt werden, und einem Modulator, der wenigstens einen in dem Überhöhungsresonator umlaufenden Lichtpuls aus dem Überhöhungsresonator auskoppelt.

Außerdem betrifft die Erfindung eine Vorrichtung zur Erzeugung von Lichtpulsen, mit einer Pulslichtquelle, die eine Abfolge von Lichtpulsen emittiert, einem optischen Verstärkermedium, das von den Lichtpulsen optisch gepumpt wird und dabei Nutzstrahlung erzeugt, und einer Multipassanordnung, die einen mehrfachen Durchgang der Nutzstrahlung durch das optische Verstärkermedium gewährleistet.

Bei bekannten Vorrichtungen zur Erzeugung von Lichtpulsen sind die mittlere Ausgangsleistung sowie die Pulsspitzenleistung aus verschiedenen technischen Gründen begrenzt. Zum einen führt die hohe maximale Lichtintensität bei kurzen oder ultrakurzen Lichtpulsen zu nicht-linearen optischen Effekten im verwendeten optischen Verstärkermedium, wodurch die Qualität der Lichtpulse verschlechtert wird. Dies begrenzt die maximale Pulsspitzenleistung im optischen Verstärker. Zum anderen limitierend sind die Zerstörschwellen der verschiedenen optischen Komponenten. Die maximale thermische Last aufgrund von Absorption in den optischen Komponenten limitiert die mittlere Ausgangsleistung sowie die maximale Pulsenergie.

Eine bekannte Technik zur Erzeugung leistungsstarker kurzer Lichtpulse ist das sog. CPA-Verfahren ("Chirped Pulse Amplification"). Dabei werden mittels eines Laseroszillators zunächst kurze Lichtpulse bei vergleichsweise geringer Pulsleistung erzeugt. Die so erzeugten Lichtpulse werden mittels geeigneter dispersiver optischer Elemente (z.B. Gitter) zeitlich gestreckt. Die zeitlich gestreckten Lichtpulse werden in einem optischen Verstärker verstärkt. Schließlich werden die verstärkten Lichtpulse, wiederum mittels geeigneter dispersiver optischer Elemente, rekomprimiert. Das Ergebnis sind leistungsstarke kurze bis ultrakurze Lichtpulse, deren Pulsdauer im Bereich 1 fs bis 1 ps liegt. Durch die zeitliche Streckung wird die Pulsspitzenleistung herabgesetzt. Dadurch wird gewährleistet, dass die optische Verstärkung erfolgen kann, ohne das optisch gepumpte Verstärkermedium zu schädigen und ohne dass nicht-lineare Effekte im optischen Verstärkermedium auftreten. Durch die Rekompression der Lichtpulse werden die einzelnen Lichtpulse zeitlich verkürzt, dabei wächst die Pulsspitzenleistung entsprechend an.

Die DE 197 50 320 C1 schlägt eine Vorrichtung zur Erzeugung von Lichtpulsen vor, wobei eine Folge zeitlich äquidistanter, phasenkohärenter Lichtpulse in einen Überhöhungsresonator mit mindestens zwei Resonatorspiegeln, die einen Lichtweg mit einer vorgegebenen Resonatorlänge aufspannen, eingekoppelt wird. In dem Überhöhungsresonator werden die eingekoppelten Lichtpulse aufeinanderfolgend zu mindestens einem umlaufenden Lichtpuls überlagert, der eine entsprechend höhere Pulsenergie aufweist. Somit dient der Überhöhungsresonator bei der bekannten Vorrichtung zur Überhöhung der mittleren Leistung und der Pulsenergie, wobei die Umlaufzeit des überhöhten Lichtpulses im Überhöhungsresonator gleich dem zeitlichen Abstand der in den Überhöhungsresonator eingekoppelten Lichtpulse ist. Typischerweise werden die mittels eines Oszillators oder eines optischen Verstärkers erzeugten Lichtpulse bei hoher Pulsfrequenz (>10 MHz) in den Überhöhungsresonator eingekoppelt und darin überhöht. Das Resultat ist eine sehr hohe Pulsspitzenleistung bei gleichzeitig sehr hoher mittlerer Leistung der erzeugten Lichtpulse. Nachteilig ist allerdings, dass sich die hohe Pulsspitzenleistung und die hohe mittlere Leistung nur innerhalb des Überhöhungsresonators nutzen lassen. Daher sind zur Nutzung der hohen Leistung im Überhöhungsresonator vorwiegend verschiedene nicht-lineare Prozesse, wie z.B. die optisch parametrische Verstärkung oder auch die Erzeugung von Licht bei höheren harmonischen Frequenzen vorgeschlagen worden. Die Auskopplung der umlaufenden Lichtpulse aus dem Überhöhungsresonator erfolgt bei der vorbekannten Vorrichtung mittels eines Modulators, z.B. in Form eines akustooptischen Modulators.

Bei der bekannten Vorrichtung wird eine kontinuierliche periodische Abfolge von Lichtpulsen in den Überhöhungsresonator eingekoppelt. Dabei beträgt die Pulsfrequenz typischerweise mehr als 10 MHz, wie oben bereits erwähnt. Die Pulsenergie der eingekoppelten Lichtpulse ist dabei niedrig bis moderat und liegt im Bereich nJ - µJ. Technologisch erreichbar ist eine Überhöhung im Überhöhungsresonator um einen Faktor der Größenordnung 1000. Die im Überhöhungsresonator schließlich umlaufenden Lichtpulse haben also eine maximale Pulsenergie im Bereich von mJ. Höhere Pulsenergien sind mit der bekannten Vorrichtung nicht erreichbar.

Die DE 690 06 958 T2 beschreibt einen Generator für Hochleistungslaserimpulse, bei dem eine Laserquelle einen Impulszug emittiert, wobei ein ringförmiger optischer Hohlraum vorgesehen ist, mit einer zur Periode des Impulszuges proportionalen Länge. In dem Ring des optischen Hohlraums befindet sich ein nichtlineares Medium, das den Impulszug empfängt, der für das nichtlineare Medium als Pumpstrahl dient, wobei das im Hohlraum zirkulierende Licht als Signalstrahl dient. Ein von einer Steuerschaltung gesteuerter elektrooptischer Polarisationsumschalter und eine doppelbrechende Einrichtung, die in den Ring des optischen Hohlraums integriert sind, arbeiten zu bestimmten Zeitpunkten, um aus dem optischen Hohlraum einen Lichtimpuls zu entnehmen.

Vor diesem Hintergrund ist es Aufgabe der Erfindung, eine verbesserte Vorrichtung zur Erzeugung von Lichtpulsen bereitzustellen. Die Vorrichtung soll dazu in der Lage sein, Lichtpulse mit höherer Pulsenergie zu erzeugen. Eine Vorrichtung gemäß einer ersten Variante der Erfindung ist im Anspruch 1 definiert. Eine Vorrichtung gemäß einer zweiten Variante der Erfindung ist im Anspruch 10 definiert.

Diese Aufgabe löst die Erfindung durch eine Vorrichtung zur Erzeugung von Lichtpulsen, mit einer Pulslichtquelle, die eine Abfolge von Lichtpulsen emittiert, einem Überhöhungsresonator, in den die von der Pulslichtquelle emittierten Lichtpulse eingekoppelt werden, und einem Modulator, der wenigstens einen in dem Überhöhungsresonator umlaufenden Lichtpuls aus dem Überhöhungsresonator auskoppelt. Die erfindungsgemäße Vorrichtung ist dadurch gekennzeichnet, dass die Pulslichtquelle in einem Burstmodus arbeitet, in der Weise, dass die Pulslichtquelle eine Abfolge von Pulspaketen, die jeweils zwei oder mehr zeitlich aufeinanderfolgende Lichtpulse umfassen, emittiert.

Die Erfindung basiert darauf, dass die Pulslichtquelle die im Überhöhungsresonator zu überlagernden Lichtpulse im Burstmodus emittiert. Das heißt, dass in dem Überhöhungsresonator die jeweils in einem Pulspaket enthaltenen Lichtpulse (kohärent oder inkohärent) überlagert werden. Dadurch dass die Pulslichtquelle im Burstmodus arbeitet, wird die mittlere Ausgangsleistung der Pulslichtquelle in den Pulspaketen komprimiert. Die im Überhöhungsresonator umlaufenden Lichtpulse können daher eine höhere Pulsenergie erhalten, ohne dass eine höhere mittlere Ausgangsleistung der Pulslichtquelle nötig ist. Dadurch wird der Tatsache Rechnung getragen, dass als Pulslichtquelle beispielsweise verfügbare Kurzpulslaser heutzutage eine maximale mittlere Leistung im Bereich von 100 W - 1 kW haben. Mit einem derartigen Kurzpulslaser als Pulslichtquelle lassen sich mit der erfindungsgemäßen Vorrichtung Lichtpulse erzeugen, die eine gegenüber dem Stand der Technik deutlich höhere Pulsenergie haben.

Die erfindungsgemäße Vorrichtung emittiert die Pulslichtquelle die Pulspakete periodisch mit einer Burstfrequenz, wobei der Modulator die Lichtpulse periodisch mit der Burstfrequenz aus dem Überhöhungsresonator auskoppelt. So erfolgt die Überlagerung der in einem Pulspaket jeweils enthaltenen Lichtpulse zu einem einzelnen überhöhten Lichtpuls, der im Überhöhungsresonator umläuft. Die Pulspause, d.h. der Zeitraum zwischen den Pulspaketen, in dem keine Lichtpulse von der Pulslichtquelle emittiert werden, wird dazu genutzt, den im Überhöhungsresonator umlaufenden Lichtpuls mittels des Modulators auszukoppeln.

Gemäß der Erfindung ist die Burstdauer, d.h. die Zeitdauer eines Pulspaketes, kleiner als der Kehrwert der Burstfrequenz. Auf diese Weise wird erreicht, dass die mittlere Ausgangsleistung der Pulslichtquelle in den Pulspaketen komprimiert wird. Dies ist Voraussetzung dafür, dass eine höhere Pulsenergie im Überhöhungsresonator erreicht wird, ohne dass eine höhere mittlere Ausgangsleistung der Pulslichtquelle benötigt wird.

Die Pulsdauer der Lichtpulse sollte im Bereich 1 fs - 1 ps liegen. Als Pulslichtquelle eignet sich somit ein kommerziell verfügbarer Kurzpulslaser, z.B. mit Faser- oder Slabverstärker, der erfindungsgemäß im Burstmodus betrieben wird. Bei dieser bevorzugten Ausgestaltung der erfindungsgemäßen Vorrichtung umfasst also die Pulslichtquelle zweckmäßig einen Oszillator, der die Lichtpulse erzeugt, und wenigstens einen Verstärker, der die Lichtpulse verstärkt. Der Burstmodus wird dadurch realisiert, dass eine gepulste Pumplichtquelle verwendet wird, die den Verstärker der Pulslichtquelle optisch pumpt.

Bei einer weiteren bevorzugten Ausgestaltung der erfindungsgemäßen Vorrichtung wird das Prinzip der Überhöhung der in den Pulspaketen jeweils enthaltenen Lichtpulse mit der eingangs beschriebenen CPA-Technik kombiniert. Dementsprechend weist die erfindungsgemäße Vorrichtung einen dem Verstärker der Pulslichtquelle vorgeschalteten Strecker auf, der die von dem Oszillator erzeugten Lichtpulse zeitlich streckt. Dem Überhöhungsresonator ist ein Kompressor vor- oder nachgeschaltet, der die Lichtpulse zeitlich komprimiert. Als Strecker und Kompressor eignen sich die üblichen dispersiven optischen Elemente, wie z.B. Gitter- oder Prismenpaare.

Die mit der erfindungsgemäßen Vorrichtung erreichbare maximale Pulsenergie der erzeugten Lichtpulse ist umso höher je stärker die mittlere Ausgangsleistung der Pulslichtquelle in den Pulspaketen komprimiert ist. Bei einer bevorzugten Ausgestaltung der erfindungsgemäßen Vorrichtung beträgt daher die Burstdauer, d.h. die Zeitdauer eines Pulspaketes, weniger als 90%, bevorzugt weniger als 50%, besonders bevorzugt weniger als 20% des Kehrwertes der Burstfrequenz. Die Burstfrequenz ist diejenige Frequenz, mit der die Pulspakete von der Pulslichtquelle emittiert werden. Die Burstfrequenz sollte weniger als 1 MHz, bevorzugt weniger als 100 kHz, weiter bevorzugt weniger als 10 kHz, besonders bevorzugt weniger als 1 kHz betragen. Bei einer Burstfrequenz von 1 kHz lassen sich, wie weiter unten noch beschrieben wird, Lichtpulse mit einer Pulsenergie von bis zu 1 J erzeugen, wozu eine Pulslichtquelle mit einer mittleren Ausgangsleistung von 1 kW und einer Pulsenergie von 1 mJ ausreichend ist. Gleichzeitig sollte die Pulsfrequenz, d.h. der Kehrwert des zeitlichen Abstands der Lichtpulse innerhalb der Pulspakete, mehr als 1 MHz, bevorzugt mehr als 10 MHz, besonders bevorzugt mehr als 100 MHz betragen.

Das erfindungsgemäße Grundprinzip kommt weiterhin bei einer Vorrichtung zur Erzeugung von Lichtpulsen zum Einsatz, mit einer Pulslichtquelle, die eine Abfolge von Lichtpulsen emittiert, einem optischen Verstärkermedium, das von den Lichtpulsen optisch gepumpt wird und dabei Nutzstrahlung erzeugt, und einer Multipassanordnung, die einen mehrfachen Durchgang der Nutzstrahlung durch das optische Verstärkermedium gewährleistet. Gemäß der Erfindung arbeitet die Pulslichtquelle wiederum in einem Burstmodus, in der Weise, dass die Pulslichtquelle eine Abfolge von Pulspaketen, die jeweils zwei oder mehr zeitlich aufeinanderfolgende Lichtpulse umfassen, emittiert.

Bei dieser Variante der Erfindung durchlaufen die Lichtpulse der Pulslichtquelle das optische Verstärkermedium einfach. Im optischen Verstärkermedium wirken die Lichtpulse der Pulslichtquelle als Pumplicht. Die zu verstärkende Nutzstrahlung durchläuft das optische Verstärkermedium mehrfach, wozu die Multipassanordnung vorgesehen ist. Diese kann durch zwei oder mehr Spiegel, ähnlich einem Resonator, realisiert sein. Die Multipassanordnung bestimmt den zeitlichen Überlapp der Nutzstrahlungspulse mit den Lichtpulsen des Pumplichts. Bei jedem Durchgang sollte die Nutzstrahlung in dem optischen Verstärkermedium mit den Lichtpulsen des Pumplichts zeitlich überlappen. Hierzu werden die Pulse der Nutzstrahlung mittels der Multipassanordnung um den zeitlichen Abstand der Lichtpulse innerhalb der Pulspakete verzögert. Hierzu kann beispielsweise die optische Weglänge der Multipassanordnung entsprechend angepasst werden. Im Ergebnis kann die N-fache Pulsenergie der Lichtpulse des Pumplichts auf einen einzelnen Puls der Nutzstrahlung übertragen werden, wobei N die Zahl der Lichtpulse in einem Pulspaket ist. Dabei wird maximale Effizienz des optischen Verstärkermediums unterstellt.

Bei dem optischen Verstärkermedium kann es sich um einen nicht-linearen Verstärker, z.B. um einen optisch parametrischen Verstärker, einen Raman-Verstärker oder auch um einen Verstärker auf Basis der Vierwellenmischung oder auch um einen anderen nicht phasensensitiven nicht-linearen optischen Verstärker handeln.

Die Pulslichtquelle emittiert die Pulspakete periodisch mit einer Burstfrequenz, wobei ein Modulator vorgesehen ist, der die Nutzstrahlung periodisch mit der Burstfrequenz aus der Multipassanordnung auskoppelt. Als Modulator kommt hier wiederum z.B. ein akusto-optischer Modulator oder auch eine Pockels-Zelle in Frage. Letztlich eignet sich zur Auskopplung der Nutzstrahlung jeder hinreichend schnelle optische Schalter. Ebenfalls denkbar ist eine geeignete Geometrie der optischen Anordnung, wie z.B. ein Loch in einem Spiegel der Multipassanordnung. Die Auskopplung erfolgt periodisch mit der Burstfrequenz, und zwar in den Pausen zwischen den Pulspaketen.

Ein wesentlicher Vorteil der Erfindung ist, dass mittels des optischen Verstärkermediums ein inkohärenter Transfer der Pulsenergie der Lichtpulse auf die Nutzstrahlung erfolgt, ohne dass eine Phasenstabilisierung innerhalb der Multipassanordnung erforderlich ist.

Aus der oben erwähnten DE 197 50 320 C1 ist das Konzept der Energieüberhöhung der als Pumplicht eines optisch parametrischen Verstärkers dienenden Lichtpulse in einem Überhöhungsresonator bereits bekannt. Bei der bekannten Vorrichtung wird jedoch der Überhöhungsresonator zum Überhöhen und Speichern der als Pumplicht dienenden Lichtpulse und nicht der Nutzstrahlung verwendet. Daher muss bei der vorbekannten Vorrichtung der Überhöhungsresonator der höheren Pulsspitzenleistung und Energie der im Überhöhungsresonator umlaufenden Lichtpulse standhalten. Außerdem muss eine aktive Phasenstabilisierung im Überhöhungsresonator erfolgen. Diese kann gemäß der Erfindung entfallen. Des Weiteren muss bei der bekannten Vorrichtung für eine phasenkorrekte und effiziente Überlagerung der Lichtpulse die nicht-lineare Kerr-Antwort des Verstärkermediums des optisch parametrischen Verstärkers kompensiert werden. All dies ist bei der erfindungsgemäßen Vorrichtung nicht erforderlich.

Ausführungsbeispiele der Erfindung werden im Folgenden anhand der Zeichnungen näher erläutert. Es zeigen:
- Figur 1:: erste Variante der erfindungsgemäßen Vorrichtung als Blockdiagramm;
- Figur 2:: Illustration des Burstmodus der Pulslichtquelle bei der erfindungsgemäßen Vorrichtung;
- Figur 3:: zweite Variante der erfindungsgemäßen Vorrichtung als Blockdiagramm.

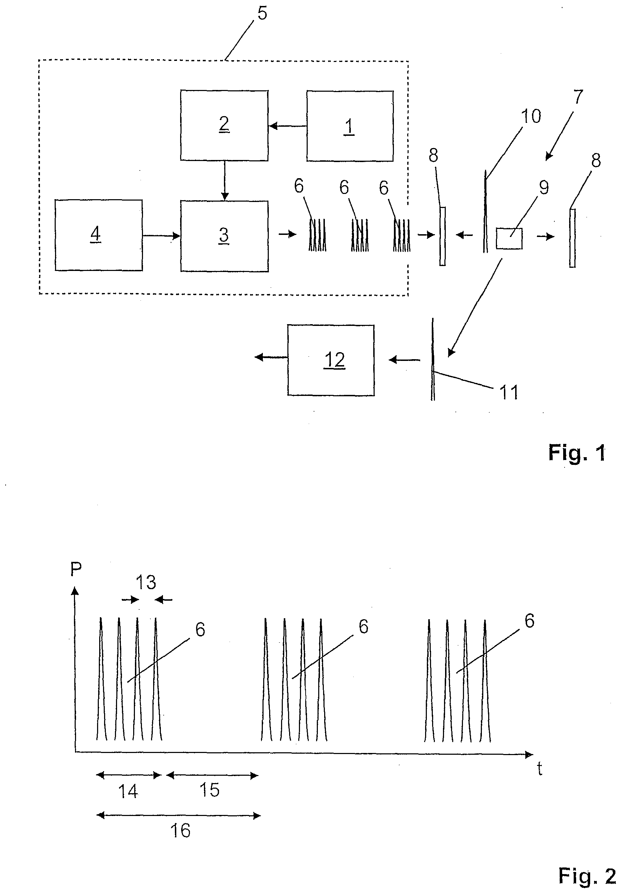

Die Figur 1 zeigt ein Ausführungsbeispiel der erfindungsgemäßen Vorrichtung als Blockdiagramm. Die Vorrichtung weist einen Oszillator 1 auf, der kurze Lichtpulse mit einer Pulsdauer von weniger als 1 ps emittiert. Die Lichtpulse des Oszillators 1 haben eine spektrale Bandbreite entsprechend der Fourierlimitierten Pulsdauer. Die Pulsfrequenz beträgt 100 MHz. Bei dem Oszillator 1 kann es sich beispielsweise um einen Faseroszillator an sich bekannter Art handeln. Die von dem Oszillator 1 emittierten Lichtpulse werden mittels eines Streckers 2 zeitlich gestreckt. Hierzu umfasst der Strecker 2 geeignete Beugungsgitter. Der Strecker 2 streckt die Lichtpulse des Oszillators 1 auf eine Pulsdauer von mehr als 100 ps. Die gestreckten Lichtpulse werden sodann in einen optischen Verstärker 3 eingekoppelt. Bei dem Verstärker 3 kann es sich um einen Faserverstärker handeln, der eine dotierte Faser (z.B. eine mit Ytterbium-lonen dotierte Faser) geeigneter Länge umfasst. Der Verstärker 3 wird von einer Pumplichtquelle 4 optisch gepumpt. Dabei emittiert die Pumplichtquelle 4 das Pumplicht gepulst. Da die Pulsfrequenz der Lichtpulse, wie oben erwähnt, 100 MHz beträgt, muss innerhalb des Verstärkermediums des Verstärkers 3 eine ausreichende Inversion innerhalb von 10 ns jeweils nach der Extraktion durch jeden Lichtpuls wieder aufgebaut sein. Hierfür ist eine erhebliche Pumpleistung in der Größenordnung von 10 kW - 100 kW erforderlich. Um bei dem dargestellten Ausführungsbeispiel Pulspakete zu erzeugen, die jeweils 1000 Lichtpulse umfassen, muss eine entsprechende Pumpleistung über einen Zeitraum von 10 µs pro Pulspaket zugeführt werden. Als Pumplichtquellen können beispielsweise Laserdioden im Wellenlängenbereich 900 - 980 nm verwendet werden. Für eine ausreichende Pumpleistung können mehrere Laserdioden verschiedener Polarisation und Wellenlänge kombiniert werden. Ebenso möglich ist es, gütegeschaltete Laser im Wellenlängenbereich 900 - 1030 nm zur Bereitstellung der notwendigen Pumpleistung zu verwenden. Die geometrische Kombination (z.B. durch Faserbündel) von ca. 100 gütegeschalteten Festkörperlasern (z.B. Faserlasern) der Emissionswellenlänge 975 nm kann eine kompakte Variante einer geeigneten gepulsten Pumplichtquelle 4 sein. Als Pumplichtquelle kommen weiterhin modulierte Dauerstrichlaser in Frage. Der Oszillator 1, der Strecker 2, der Verstärker 3 und die Pumplichtquelle 4 bilden gemeinsam eine Pulslichtquelle 5, die in einem Burstmodus arbeitet, in der Weise, dass die Pulslichtquelle 5 eine Abfolge von Pulspaketen 6 emittiert.

Bei dem Ausführungsbeispiel werden, wie schon erwähnt, 1000 Lichtpulse pro Pulspaket 6 emittiert. Die Pulsfrequenz, d.h. der Kehrwert des zeitlichen Abstands der Lichtpulse innerhalb eines Pulspakets 6 beträgt, wie oben ebenfalls bereits erwähnt, 100 MHz. Die Burstfrequenz, d.h. die Frequenz, mit der die Pulslichtquelle 5 die Pulspakete 6 periodisch emittiert, beträgt 1 kHz. Dadurch ergibt sich für den Verstärker 3 insgesamt ein Duty-Cycle von 1%. Somit emittiert die Pulslichtquelle 5 bei dem Ausführungsbeispiel 10⁶ Lichtpulse pro Sekunde. Bei einer mittleren Leistung von 1 kW ergibt sich eine Pulsenergie von 1 mJ. Zu erwähnen ist in diesem Zusammenhang, dass die Lichtpulse innerhalb der Pulspakete 6 nicht zwingend eine konstante Amplitude haben müssen. Eine variierende Pulsamplitude innerhalb jedes Pulspaketes 6 ist ohne Weiteres denkbar. Beispielsweise kann die Amplitude der Lichtpulse innerhalb jedes Pulspaketes 6 im Verlauf der Zeit ansteigen.

Die erfindungsgemäße Vorrichtung umfasst des Weiteren einen Überhöhungsresonator 7, der in dem dargestellten Ausführungsbeispiel durch zwei Spiegel 8 gebildet ist. Der Überhöhungsresonator 7 kann auf jede andere denkbare Art und Weise realisiert werden, beispielsweise durch eine größere Anzahl von Spiegeln oder auch als ringförmiger Resonator. Die von der Pulslichtquelle 5 emittierten Lichtpulse werden in den Überhöhungsresonator 7 eingekoppelt, wo sie kohärent überlagert werden. Hierzu muss eine feste Phasenbeziehung zwischen den von der Pulslichtquelle 5 emittierten Lichtpulsen und den im Überhöhungsresonator 7 umlaufenden Lichtpulsen gewährleistet sein. Damit es zu der gewünschten Überlagerung und Überhöhung kommt, entspricht die Umlaufzeit der Lichtpulse im Überhöhungsresonator 7 dem zeitlichen Abstand der Lichtpulse innerhalb der Pulspakete 6, d.h. dem Kehrwert der Pulsfrequenz. Um diese Bedingung herzustellen, kann es sinnvoll sein, den Überhöhungsresonator 7 geeignet aktiv zu stabilisieren. Entsprechende Regelmechanismen, die z.B. die effektive Resonatorlänge regeln, sind aus dem Stand der Technik bekannt.

Weiterhin vorgesehen ist ein Modulator 9, bei dem es sich um einen akustooptischen Modulator oder eine Pockels-Zelle handeln kann, der einen in dem Überhöhungsresonator 7 umlaufenden Lichtpuls 10 aus dem Überhöhungsresonator 7 auskoppelt. Der ausgekoppelte Lichtpuls ist in der Figur 1 mit der Bezugsziffer 11 bezeichnet. Kern der Erfindung ist die Überhöhung der Lichtpulse in dem Überhöhungsresonator 7, wobei die Lichtpulse innerhalb eines Pulspaketes 6 überlagert und entsprechend überhöht werden. Die Pulsenergien der Lichtpulse, die von einem Pulspaket 6 umfasst sind, werden zu dem im Überhöhungsresonator 7 umlaufenden Lichtpuls 10 addiert. Dies ergibt bei dem dargestellten Ausführungsbeispiel eine Pulsenergie des Lichtpulses 10 im Überhöhungsresonator 7 von 1 J. Dieser Wert gilt näherungsweise unter der Annahme, dass keinerlei Verluste auftreten. In der Realität ist eine gewisse Verlustrate zu berücksichtigen. Die Pulspause, d.h. der Zeitraum zwischen den Pulspaketen 6, in dem keine Lichtpulse von der Pulslichtquelle 5 emittiert werden, wird genutzt, um den im Überhöhungsresonator 7 umlaufenden Lichtpuls 10 mittels des Modulators 9 aus dem Überhöhungsresonator 7 auszukoppeln. Sobald das nächste Pulspaket 6 in den Überhöhungsresonator 7 eingekoppelt wird, beginnt der Prozess von neuem.

Bei dem dargestellten Ausführungsbeispiel beträgt die Burstfrequenz, d.h. die Frequenz, mit der die Pulslichtquelle 5 die Lichtpakete 6 periodisch emittiert, 1 kHz. Dies ist die Frequenz, mit der der Modulator 9 den jeweils umlaufenden Lichtpuls 10 aus dem Überhöhungsresonator 7 auskoppelt. Die ausgekoppelten Lichtpulse 11 stehen entsprechend mit einer Wiederholfrequenz von 1 kHz zur Verfügung.

Der ausgekoppelte Lichtpuls 11 durchläuft schließlich einen dem Überhöhungsresonator 7 nachgeschalteten Kompressor 12, der den Lichtpuls 11 zeitlich komprimiert, so dass die am Ausgang der in der Figur 1 dargestellten Vorrichtung schlussendlich emittierten Lichtpulse wiederum eine Pulsdauer von ca. 1 ps haben. Hierzu umfasst der Kompressor 12 wiederum geeignete dispersive Elemente in Form von Beugungsgittern. Die Pulsspitzenleistung am Ausgang der Vorrichtung beträgt bei dem Ausführungsbeispiel bis zu 1 TW.

Die in der Figur 1 dargestellte Vorrichtung kann auf verschiedene Weise abgewandelt werden. So ist es z.B. denkbar, mehrere räumlich separate Pulslichtquellen 5 zu verwenden, wobei die von den Pulslichtquellen 5 emittierten Pulspakete 6 dem Überhöhungsresonator 7 über verschiedene Eintrittspunkte (verschiedene Spiegel oder Eintrittswinkel) zugeführt werden. Auf diese Weise kann die maximale Pulsenergie des im Überhöhungsresonator 7 umlaufenden Lichtpulses 10 weiter gesteigert werden. Denkbar ist es weiterhin, die Lichtpulse mehrerer Pulslichtquellen 5 vor dem Eintritt in den Überhöhungsresonator 7 kohärent zu überlagern. Außerdem ist es möglich, mehrere Überhöhungsresonatoren 7 der in der Figur 1 dargestellten Art parallel einzusetzen, wobei die ausgekoppelten Lichtpulse 11 nach dem Überhöhungsvorgang kohärent oder auch inkohärent überlagert werden, z.B. mittels geeigneter Strahlteiler. Die Überlagerung kann auch bei mehreren verschiedenen Wellenlängen der Lichtpulse an einem geeigneten dispersiven Element (z.B. Gitter) erfolgen.

Das Diagramm in Figur 2 zeigt die von der Pulslichtquelle 5 gemäß der Erfindung emittierte Lichtpulsfolge detaillierter. Dargestellt ist die Leistung P als Funktion der Zeit t. Der Zeitabstand zwischen den Lichtpulsen innerhalb eines Pulspaketes 6 ist mit 13 bezeichnet. Der Kehrwert des Zeitabstands 13 ist die Pulsfrequenz. Die Dauer jedes Pulspaketes 6 ist mit 14 bezeichnet. Dies ist die Burstdauer im Sinne der Erfindung. Mit 15 ist der zeitliche Abstand zwischen zwei Pulspaketen bezeichnet. Dieser gibt die Dauer der Pulspause an, während der die Pulslichtquelle 5 keine Lichtpulse emittiert. Während der Pulspause 15 wird, wie oben erläutert, der im Überhöhungsresonator 7 umlaufende Lichtpuls 10 mittels des Modulators 9 ausgekoppelt. Das Zeitintervall vom Beginn eines Pulspaketes 6 bis zum Beginn des nächsten Pulspaketes 6 ist in der Figur 2 mit 16 bezeichnet. Der Kehrwert des Zeitintervalls 16 ist die Burstfrequenz.

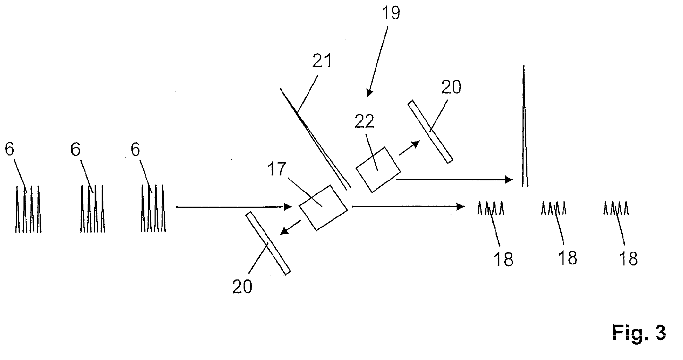

Bei der in der Figur 3 gezeigten Variante der Erfindung werden die Pulspakete 6, die mit einer Pulslichtquelle 5 entsprechend Figur 1 erzeugt werden, dazu genutzt, ein nicht-linear optisches Verstärkermedium 17 optisch zu pumpen. Bei dem Verstärkermedium 17 handelt es sich z.B. um das Medium eines optisch parametrischen Verstärkers, eines Raman-Verstärkers, eines optischen Verstärkers auf der Basis der Vierwellenmischung oder eines anderen nicht phasensensitiven Verstärkers. Dabei durchlaufen die Lichtpulse der Pulspakete 6 das Verstärkermedium 17 einfach, und der Großteil der Pulsenergie wird in dem Verstärkermedium 17 absorbiert, so dass dort Inversion erzeugt wird. Danach haben die Lichtpulse eine deutlich reduzierte Intensität. Die Lichtpulse nach Durchlaufen des Verstärkermediums sind in der Figur 3 mit der Bezugsziffer 18 bezeichnet. Diese verlassen die Anordnung. Das Verstärkermedium 17 befindet sich in einer Multipassanordnung 19, die bei dem in der Figur 3 gezeigten Ausführungsbeispiel durch zwei Spiegel 20 gebildet ist. Die Nutzstrahlung ist bei dem Ausführungsbeispiel ein in der Multipassanordnung 19 umlaufender Lichtpuls 21. Die Nutzstrahlung wird in dem Verstärkermedium 17 verstärkt. Falls es erforderlich ist, wird ein mittels einer geeigneten Strahlungsquelle (nicht dargestellt) erzeugter Lichtpuls als Startpuls in die Multipassanordnung 19 injiziert, um den Verstärkungsprozess in Gang zu setzen. Der Lichtpuls 21 läuft in der Multipassanordnung 19 so oft um, wie es der Zahl der Lichtpulse pro Pulspaket entspricht. Dabei ist die Multipassanordnung 19 so ausgelegt, dass der umlaufende Lichtpuls 21 mit den Lichtpulsen des Pumplichts, d.h. mit den Lichtpulsen der Pulspakete 6 im Verstärkermedium 17 zeitlich und räumlich überlappt. Hierzu verzögert die Multipassanordnung 19 die Umlaufzeit des Lichtpulses 21 entsprechend dem zeitlichen Abstand 13 der Lichtpulse innerhalb der Pulspakete 6. Im Ergebnis kann (idealisiert) die gesamte Pulsenergie, d.h. die Summe der Pulsenergien der einzelnen Lichtpulse innerhalb eines Pulspaketes 6 durch das nicht-lineare optische Verstärkermedium 17 auf den Nutzstrahlungspuls 21 übertragen werden. Zur Auskopplung des Nutzstrahlungspulses 21 aus der Multipassanordnung 19 dient wiederum ein schneller optischer Schalter 21, wie z.B. ein akusto-optischer Modulator oder eine Pockels-Zelle. Dabei erfolgt die Auskopplung der Nutzstrahlung periodisch mit der Burstfrequenz, und zwar, wie bei dem in Figur 1 gezeigten Ausführungsbeispiel, in den Pulspausen zwischen den Pulspaketen 6.

Bei dem in Figur 3 dargestellten Ausführungsbeispiel wird also nicht das Pumplicht der Pulspakete 6 überhöht, sondern die Nutzstrahlung. Das nicht-lineare optische Verstärkermedium 17 erlaubt dabei einen inkohärenten Transfer der Energie der Lichtpulse eines Pulspaketes 6 auf den Lichtpuls 21 der Nutzstrahlung, und zwar ohne die Notwendigkeit einer Phasenstabilisierung innerhalb der Multipassanordnung 19.

## Patentansprüche

1. Vorrichtung zur Erzeugung von Lichtpulsen, mit einer Pulslichtquelle (5), die eine Abfolge von Lichtpulsen emittiert, einem Überhöhungsresonator (7), in den die von der Pulslichtquelle (5) emittierten Lichtpulse eingekoppelt werden, und einem Modulator (9), der wenigstens einen in dem Überhöhungsresonator (7) umlaufenden Lichtpuls (10) aus dem Überhöhungsresonator (7) auskoppelt,
**dadurch gekennzeichnet, dass** die Pulslichtquelle (5) in einem Burstmodus arbeitet, in der Weise, dass die Pulslichtquelle (5) eine Abfolge von Pulspaketen (6), die jeweils zwei oder mehr zeitlich aufeinanderfolgende Lichtpulse umfassen, emittiert, wobei die Pulslichtquelle (5) die Pulspakete (6) periodisch mit einer Burstfrequenz emittiert, wobei der Modulator (9) die Lichtpulse periodisch mit der Burstfrequenz aus dem Überhöhungsresonator (7) auskoppelt, wobei die Burstdauer (14), d.h. die Zeitdauer eines Pulspakets (6), kleiner ist als der Kehrwert der Burstfrequenz.

2. Vorrichtung nach Anspruch 1, **dadurch gekennzeichnet, dass** die Pulsdauer der Lichtpulse 1 fs bis 1 ps beträgt.

3. Vorrichtung nach Anspruch 1 oder 2, **dadurch gekennzeichnet, dass** die Pulslichtquelle (5) einen Oszillator (1), der die Lichtpulse erzeugt, und wenigstens einen Verstärker (3), der die Lichtpulse verstärkt, umfasst.

4. Vorrichtung nach Anspruch 3, **gekennzeichnet durch** eine gepulste Pumplichtquelle (4), die den Verstärker (3) der Pulslichtquelle (5) optisch pumpt.

5. Vorrichtung nach Anspruch 3 oder 4, **gekennzeichnet durch** einen dem Verstärker (3) vorgeschalteten Strecker (2), der die von dem Oszillator (1) erzeugten Lichtpulse zeitlich streckt.

6. Vorrichtung nach Anspruch 5, **gekennzeichnet durch** einen dem Überhöhungsresonator (7) vor- oder nachgeschalteten Kompressor (12), der die Lichtpulse zeitlich komprimiert.

7. Vorrichtung nach einem der Ansprüche 1 bis 6, **dadurch gekennzeichnet, dass** die Burstdauer (14) weniger als 90%, bevorzugt weniger als 50%, besonders bevorzugt weniger als 20% des Kehrwertes der Burstfrequenz beträgt.

8. Vorrichtung nach einem der Ansprüche 1 bis 7, **dadurch gekennzeichnet, dass** die Burstfrequenz weniger als 1 MHz, bevorzugt weniger als 100 kHz, weiter bevorzugt weniger als 10 kHz, besonders bevorzugt weniger als 1 kHz beträgt.

9. Vorrichtung nach einem der Ansprüche 1 bis 8, **dadurch gekennzeichnet, dass** die Pulsfrequenz, d.h. der Kehrwert des zeitlichen Abstands (13) der Lichtpulse innerhalb der Pulspakete (6), mehr als 1 MHz, bevorzugt mehr als 10 MHz, besonders bevorzugt mehr als 100 MHz beträgt.

10. Vorrichtung zur Erzeugung von Lichtpulsen, mit einer Pulslichtquelle (5), die eine Abfolge von Lichtpulsen emittiert, einem optischen Verstärkermedium (17), das von den Lichtpulsen optisch gepumpt wird und dabei Nutzstrahlung (21) verstärkt, und einer Multipassanordnung (19), die einen mehrfachen Durchgang der Nutzstrahlung (21) durch das optische Verstärkermedium (17) gewährleistet,
**dadurch gekennzeichnet, dass** die Pulslichtquelle (5) in einem Burstmodus arbeitet, in der Weise, dass die Pulslichtquelle (5) eine Abfolge von Pulspaketen (6), die jeweils zwei oder mehr zeitlich aufeinanderfolgende Lichtpulse umfassen, emittiert, wobei die Pulslichtquelle (5) die Pulspakete (6) periodisch mit einer Burstfrequenz emittiert, wobei ein Modulator (22) vorgesehen ist, der die Nutzstrahlung (21) periodisch mit der Burstfrequenz aus der Multipassanordnung (19) auskoppelt, wobei die Burstdauer (14), d.h. die Zeitdauer eines Pulspakets (6), kleiner ist als der Kehrwert der Burstfrequenz.

11. Vorrichtung nach Anspruch 10, **dadurch gekennzeichnet, dass** die Multipassanordnung (19) so eingerichtet ist, dass die Zahl der Durchgänge der Nutzstrahlung (21) durch das optische Verstärkermedium (17) gleich der Zahl der Lichtpulse in einem Pulspaket (6) ist.

12. Vorrichtung nach Anspruch 10 oder 11, **dadurch gekennzeichnet, dass** die Pulslichtquelle (5) einen Oszillator (1), der die Lichtpulse erzeugt, und wenigstens einen Verstärker (3), der die Lichtpulse verstärkt, umfasst, wobei eine gepulste Pumplichtquelle (4) den Verstärker (3) der Pulslichtquelle (5) optisch pumpt.

13. Vorrichtung nach einem der Ansprüche 10 bis 12, **dadurch gekennzeichnet, dass** die Burstdauer (14), d.h. die Zeitdauer eines Pulspakets (6), weniger als 90%, bevorzugt weniger als 50%, besonders bevorzugt weniger als 20% des Kehrwertes der Burstfrequenz beträgt, wobei die Burstfrequenz weniger als 1 MHz, bevorzugt weniger als 100 kHz, weiter bevorzugt weniger als 10 kHz, besonders bevorzugt weniger als 1 kHz beträgt, und wobei die Pulsfrequenz, d.h. der Kehrwert des zeitlichen Abstands (13) der Lichtpulse innerhalb eines Pulspakets (6), mehr als 1 MHz, bevorzugt mehr als 10 MHz, besonders bevorzugt mehr als 100 MHz beträgt.

## Claims

1. Apparatus for producing light pulses, having a pulsed light source (5) that emits a sequence of light pulses, an enhancement cavity (7) into which the light pulses emitted by the pulsed light source (5) are coupled and a modulator (9) that output couples at least one light pulse (10) circulating in the enhancement cavity (7) from the enhancement cavity (7),
**characterized**
**in that** the pulsed light source (5) operates in a burst mode in such a way that the pulsed light source (5) emits a sequence of pulse packets (6), which each comprise two or more temporally successive light pulses, wherein the pulsed light source (5) emits the pulse packets (6) periodically at a burst frequency, wherein the modulator (9) periodically output couples the light pulses from the enhancement cavity (7) at the burst frequency, wherein the burst duration (14), i.e. the time duration of a pulse packet (6), is shorter than the inverse of the burst frequency.

2. Apparatus according to Claim 1, **characterized in that** the pulse duration of the light pulses is 1 fs to 1 ps.

3. Apparatus according to Claim 1 or 2, **characterized in that** the pulsed light source (5) comprises an oscillator (1) that produces the light pulses and at least one amplifier (3) that amplifies the light pulses.

4. Apparatus according to Claim 3, **characterized by** a pulsed pump light source (4) that optically pumps the amplifier (3) of the pulsed light source (5).

5. Apparatus according to Claim 3 or 4, **characterized by** a stretcher (2) disposed upstream of the amplifier (3), said stretcher temporally stretching the light pulses produced by the oscillator (1).

6. Apparatus according to Claim 5, **characterized by** a compressor (12) disposed upstream or downstream of the enhancement cavity (7), said compressor temporally compressing the light pulses.

7. Apparatus according to any one of Claims 1 to 6, **characterized in that** the burst duration (14) is less than 90%, preferably less than 50%, particularly preferably less than 20% of the inverse of the burst frequency.

8. Apparatus according to any one of Claims 1 to 7, **characterized in that** the burst frequency is less than 1 MHz, preferably less than 100 kHz, further preferably less than 10 kHz, particularly preferably less than 1 kHz.

9. Apparatus according to any one of Claims 1 to 8, **characterized in that** the pulse frequency, i.e. the inverse of the temporal distance (13) of the light pulses within the pulse packets (6), is more than 1 MHz, preferably more than 10 MHz, particularly preferably more than 100 MHz.

10. Apparatus for producing light pulses, having a pulsed light source (5) that emits a sequence of light pulses, an optical gain medium (17) that is optically pumped by the light pulses and amplifies used radiation (21) in the process, and a multi-pass arrangement (19) that ensures multiple passages of the used radiation (21) through the optical gain medium (17),
**characterized**
**in that** the pulsed light source (5) operates in a burst mode in such a way that the pulsed light source (5) emits a sequence of pulse packets (6) that each comprise two or more temporally successive light pulses, wherein the pulsed light source (5) periodically emits the pulse packets (6) with a burst frequency, wherein provision is made of a modulator (22) that periodically output couples the used radiation (21) from the multi-pass arrangement (19) at the burst frequency, wherein the burst duration (14), i.e. the time duration of a pulse packet (6), is less than the inverse of the burst frequency.

11. Apparatus according to Claim 10, **characterized in that** the multi-pass arrangement (19) is configured in such a way that the number of passages of the used radiation (21) through the optical gain medium (17) equals the number of light pulses in a pulse packet (6) .

12. Apparatus according to Claim 10 or 11, **characterized in that** the pulsed light source (5) comprises an oscillator (1) that produces the light pulses and at least one amplifier (3) that amplifies the light pulses, wherein a pulsed pump light source (4) optically pumps the amplifier (3) of the pulsed light source (5).

13. Apparatus according to any one of Claims 10 to 12, **characterized in that** the burst duration (14), i.e. the time duration of a pulse packet (6), is less than 90%, preferably less than 50%, particularly preferably less than 20% of the inverse of the burst frequency, wherein the burst frequency is less than 1 MHz, preferably less than 100 kHz, further preferably less than 10 kHz, particularly preferably less than 1 kHz, and wherein the pulse frequency, i.e. the inverse of the temporal distance (13) of the light pulses within a pulse packet (6), is more than 1 MHz, preferably more than 10 MHz, particularly preferably more than 100 MHz.

## Revendications

1. Dispositif pour générer des impulsions lumineuses, comprenant une source de lumière pulsée (5) qui émet une séquence d'impulsions lumineuses, un résonateur de surhaussement (7) dans lequel sont injectées les impulsions lumineuses émises par la source de lumière pulsée (5), et un modulateur (9) qui extrait du résonateur de surhaussement (7) au moins une impulsion lumineuse (10) qui circule dans le résonateur de surhaussement (7),
**caractérisé en ce que**
la source de lumière pulsée (5) fonctionne dans un mode de rafales de telle sorte que la source de lumière pulsée (5) émet une séquence de paquets d'impulsions (6) comportant chacun deux impulsions lumineuses successives ou plus, la source de lumière pulsée (5) émettant les paquets d'impulsions (6) périodiquement avec une fréquence de rafale, le modulateur (9) extrayant périodiquement les impulsions lumineuses à la fréquence de rafale du résonateur de surhaussement (7), la durée de rafale (14), c'est-à-dire la durée d'un paquet d'impulsions (6), étant inférieure à l'inverse de la fréquence de rafale.

2. Dispositif selon la revendication 1, **caractérisé en ce que** la durée d'impulsion des impulsions lumineuses est de 1 fs à 1 ps.

3. Dispositif selon la revendication 1 ou 2, **caractérisé en ce que** la source de lumière pulsée (5) comporte un oscillateur (1) qui génère les impulsions lumineuses et au moins un amplificateur (3) qui amplifie les impulsions lumineuses.

4. Dispositif selon la revendication 3, **caractérisé par** une source de lumière de pompage pulsée (4) qui effectue un pompage optique de l'amplificateur (3) de la source de lumière pulsée (5).

5. Dispositif selon la revendication 3 ou 4, **caractérisé par** un dispositif d'étirement (2) monté en amont de l'amplificateur (3), lequel étire dans le temps les impulsions lumineuses générées par l'oscillateur (1).

6. Dispositif selon la revendication 5, **caractérisé par** un compresseur (12) monté en amont ou en aval du résonateur de surhaussement (7), lequel compresse les impulsions lumineuses dans le temps.

7. Dispositif selon l'une des revendications 1 à 6, **caractérisé en ce que** la durée de rafale (14) est égale à moins de 90 %, de préférence à moins de 50 %, notamment de préférence à moins de 20 % de l'inverse de la fréquence de rafale.

8. Dispositif selon l'une des revendications 1 à 7, **caractérisé en ce que** la fréquence de rafale est inférieure à 1 MHz, de préférence inférieure à 100 kHz, encore de préférence inférieure à 10 kHz, particulièrement de préférence inférieure à 1 kHz.

9. Dispositif selon l'une des revendications 1 à 8, **caractérisé en ce que** la fréquence d'impulsion, c'est-à-dire l'inverse de l'écart dans le temps (13) entre les impulsions lumineuses à l'intérieur des paquets d'impulsions (6), est supérieure à 1 MHz, de préférence supérieure à 10 MHz, notamment de préférence supérieure à 100 MHz.

10. Dispositif pour générer des impulsions lumineuses, comprenant une source de lumière pulsée (5) qui émet une séquence d'impulsions lumineuses, un milieu amplificateur optique (17) qui est pompé optiquement par les impulsions lumineuses et qui amplifie ainsi un rayonnement utile (21), et un arrangement à passages multiples (19) qui garantit un passage multiple du rayonnement utile (21) à travers le milieu amplificateur optique (17),
**caractérisé en ce que**
la source de lumière pulsée (5) fonctionne dans un mode de rafales de telle sorte que la source de lumière pulsée (5) émet une séquence de paquets d'impulsions (6) comportant chacun deux impulsions lumineuses successives ou plus, la source de lumière pulsée (5) émettant les paquets d'impulsions (6) périodiquement avec une fréquence de rafale, un modulateur (22) étant présent, lequel extrait périodiquement le rayonnement utile (21) à la fréquence de rafale de l'arrangement à passages multiples (19), la durée de rafale (14), c'est-à-dire la durée d'un paquet d'impulsions (6), étant inférieure à l'inverse de la fréquence de rafale.

11. Dispositif selon la revendication 10, **caractérisé en ce que** l'arrangement à passages multiples (19) est conçu de telle sorte que le nombre de passages du rayonnement utile (21) à travers le milieu amplificateur optique (17) est égal au nombre d'impulsions lumineuses dans un paquet d'impulsions (6) .

12. Dispositif selon la revendication 10 ou 11, **caractérisé en ce que** la source de lumière pulsée (5) comporte un oscillateur (1) qui génère les impulsions lumineuses et au moins un amplificateur (3) qui amplifie les impulsions lumineuses, une source de lumière de pompage pulsée (4) effectuant un pompage optique de l'amplificateur (3) de la source de lumière pulsée (5).

13. Dispositif selon l'une des revendications 10 à 12, **caractérisé en ce que** la durée de rafale (14), c'est-à-dire la durée d'un paquet d'impulsions (6), est égale à moins de 90 %, de préférence à moins de 50 %, notamment de préférence à moins de 20 % de l'inverse de la fréquence de rafale, la fréquence de rafale étant inférieure à 1 MHz, de préférence inférieure à 100 kHz, encore de préférence inférieure à 10 kHz, particulièrement de préférence inférieure à 1 kHz, et la fréquence d'impulsion, c'est-à-dire l'inverse de l'écart dans le temps (13) entre les impulsions lumineuses à l'intérieur des paquets d'impulsions (6), étant supérieure à 1 MHz, de préférence supérieure à 10 MHz, notamment de préférence supérieure à 100 MHz.
